# EUROPEAN PATENT APPLICATION

(11) **EP 4 696 547 A1**
(43) Date of publication of application: **18.02.2026**
(21) Application number: 24806123.6
(22) Date of filing: 20.02.2024
(51) Int. Cl.: B60L 53/60, H02J 7/00, H02J 9/00, B60L 53/22

(54) **CHARGING DEVICE**

(30) Priority: 17.05.2023 CN 202310559078
(71) Applicant: Huawei Digital Power Technologies Co., Ltd., Shenzhen, Guangdong 518043 (CN)
(72) Inventor: LIU, Lin, Shenzhen, Guangdong 518043 (CN)
(74) Representative: Gill Jennings & Every LLP
(86) International application number: PCT/CN2024/077711
(87) International publication number: WO 2024/234762

(57) **Abstract**

A charging device is provided. The charging device includes a charging module (100) and a second control unit. The charging module (100) includes a switch component, an auxiliary power supply, a first control unit, and a rectifier circuit. The auxiliary power supply supplies power to the first control unit, and the first control unit is configured to control the rectifier circuit. A first end of the switch component is connected to an output end of the rectifier circuit or an output end of an alternating current power supply, and a second end of the switch component is connected to an input end of the auxiliary power supply. The second control unit is configured to control turn-on and turn-off of the switch component. The auxiliary power supply supplies power to the first control unit in response to turn-on of the switch component. The auxiliary power supply stops, in response to turn-off of the switch component, supplying power to the first control unit.

## Description

This application claims priority to Chinese Patent Application No. 202310559078.6, filed with the China National Intellectual Property Administration on May 17, 2023 and entitled "CHARGING DEVICE", which is incorporated herein by reference in its entirety.

### TECHNICAL FIELD

This application relates to the field of new energy, and in particular, to a charging device.

### BACKGROUND

With the booming development of the electric vehicle industry, there are more electric vehicles. Currently, electric vehicles are generally charged through charging piles. In this case, there is a need for an increased quantity of charging piles to meet a charging requirement of the electric vehicles. When a charging pile is not connected to an electric vehicle for charging, the charging pile needs to be in a standby state that is more energy-saving. Standby power of an existing charging pile is high and generally ranges from dozens of watts to hundreds of watts, and electric energy costs incurred when the charging pile is on standby is high. Therefore, standby power consumption of the charging pile needs to be reduced to reduce the costs.

### SUMMARY

This application provides a charging device, so that standby power consumption of a charging module can be greatly reduced, and an energy waste of the charging module in a standby state is reduced.

According to a first aspect, this application provides a charging device. The charging device includes a charging module and a second control unit. The charging module includes a switch component, an auxiliary power supply, a first control unit, and a rectifier circuit. The auxiliary power supply is configured to convert electric energy input by an input end of the auxiliary power supply, to supply power to the first control unit. The first control unit is configured to control the rectifier circuit. The rectifier circuit is configured to convert an alternating current input by an alternating current power supply into a direct current. A first end of the switch component is configured to connect to an output end of the rectifier circuit or an output end of the alternating current power supply, and a second end of the switch component is configured to connect to the input end of the auxiliary power supply. The second control unit is configured to control turn-on and turn-off of the switch component. The auxiliary power supply supplies power to the first control unit in response to turn-on of the switch component. The auxiliary power supply stops, in response to turn-off of the switch component, supplying power to the first control unit.

In this solution, the second control unit in the charging device is configured to control turn-on or turn-off of the switch component in the charging module. When the second control unit controls the switch component to be turned on, the auxiliary power supply supplies power to the first control unit, the first control unit controls the rectifier circuit to work, and the charging module enters a working state. After the charging module enters a standby state, the rectifier circuit stops working and no longer consumes electric energy. The second control unit controls the switch component to be turned off, the auxiliary power supply stops supplying power to the first control unit, and the first control unit also no longer consumes electric energy, so that standby power consumption of the charging module is greatly reduced, and an energy waste of the charging module in the standby state is reduced.

In a possible implementation, the output end of the rectifier circuit or the output end of the alternating current power supply includes a first output end and a second output end, the input end of the auxiliary power supply includes a first input end and a second input end, and the switch component includes a first switch component. A first end of the first switch component is configured to connect to the first output end of the rectifier circuit or the first output end of the alternating current power supply, and a second end of the first switch component is configured to connect to the first input end of the auxiliary power supply.

In a possible implementation, the switch component further includes a second switch component. A first end of the second switch component is configured to connect to the second output end of the rectifier circuit or the second output end of the alternating current power supply, and the second end of the first switch component is configured to connect to the second input end of the auxiliary power supply.

In this solution, two input ends of the auxiliary power supply are both connected to the switch component, and two switch components are both controlled by the second control unit. When either of the two switch components is turned off, the auxiliary power supply stops supplying power to the first control unit.

In a possible implementation, the output end of the alternating current power supply includes a third output end, the input end of the auxiliary power supply includes a third input end, and the switch component includes a third switch component. A first end of the third switch component is configured to connect to the third output end of the alternating current power supply, and a second end of the third switch component is configured to connect to the third input end of the auxiliary power supply.

In this solution, the alternating current power supply outputs a three-phase alternating current, and the auxiliary power supply can convert the three-phase alternating current into electric energy that can be used by the first control unit. In addition, three input ends of the auxiliary power supply are connected to three output ends of the alternating current power supply through the first switch component, the second switch component, and the third switch component respectively, and at least two of the three switch components are controlled to be turned off, so that the alternating current power supply stops outputting electric energy to the auxiliary power supply. The charging module in this solution has a wider application scope and application scenario.

In a possible implementation, the charging device further includes a direct current conversion DC/DC circuit. An input end of the DC/DC circuit is configured to connect to the output end of the rectifier circuit.

In this solution, the charging module further includes the DC/DC circuit. The DC/DC circuit performs voltage boosting or voltage bucking on a current output by a rectifier module, so that a current output by the charging module can meet a charging requirement of a to-be-charged device.

In a possible implementation, the charging device includes a charging interface, an input end of the charging interface is configured to connect to an output end of the DC-DC circuit, and an output end of the charging interface is configured to connect to the to-be-charged device.

In a possible implementation, the first control unit includes at least one of a digital signal processing DSP circuit, a communication circuit, a sampling circuit, and a drive circuit.

In this solution, the first control unit includes at least one of the DSP circuit, the communication circuit, the sampling circuit, and the drive circuit. Any circuit of the first control unit is powered by the auxiliary power supply. When the switch component is turned off, the auxiliary power supply stops supplying power to any circuit of the first control unit, so that the first control unit no longer consumes electric energy. In this way, the standby power consumption of the charging module is greatly reduced.

In a possible implementation, the switch component includes components such as a gate turn-off thyristor (gate-turn-off thyristor, GTO), a metal oxide semiconductor field-effect transistor (metal oxide semiconductor field-effect transistor, MOSFET), an insulated gate bipolar transistor (insulated-gate bipolar transistor, IGBT), a gallium nitride transistor, and a silicon carbide transistor.

In a possible implementation, the alternating current power supply may be a single-phase electric power or a three-phase electric power.

According to a second aspect, this application provides a charging device. The charging device includes a charging module and a second control unit. The charging module includes a switch component, an auxiliary power supply, a first control unit, and a DC/DC circuit. The auxiliary power supply is configured to convert electric energy input by an input end of the auxiliary power supply, to supply power to the first control unit. The first control unit is configured to control the DC/DC circuit. A first end of the switch component is configured to connect to an input end of the DC/DC circuit, and a second end of the switch component is configured to connect to the input end of the auxiliary power supply. The second control unit is configured to control turn-on and turn-off of the switch component. The auxiliary power supply supplies power to the first control unit in response to turn-on of the switch component. The auxiliary power supply stops, in response to turn-off of the switch component, supplying power to the first control unit.

In this solution, the second control unit in the charging device is configured to control turn-on or turn-off of the switch component in the charging module. When the second control unit controls the switch component to be turned on, the auxiliary power supply supplies power to the first control unit, the first control unit controls the DC/DC circuit to work, and the charging module enters a working state. After the charging module enters a standby state, a rectifier circuit stops working and no longer consumes electric energy. The second control unit controls the switch component to be turned off, the auxiliary power supply stops supplying power to the first control unit, and the first control unit also no longer consumes electric energy, so that standby power consumption of the charging module is greatly reduced, and energy waste of the charging module in the standby state is reduced.

In a possible implementation, the input end of the DC/DC circuit includes a first input end and a second input end, the input end of the auxiliary power supply includes a first input end and a second input end, and the switch component includes a first switch component. A first end of the first switch component is configured to connect to the first input end of the DC/DC circuit, and a second end of the first switch component is configured to connect to the first input end of the auxiliary power supply.

In a possible implementation, the switch component further includes a second switch component. A first end of the second switch component is configured to connect to the second input end of the DC/DC circuit, and a second end of the second switch component is configured to connect to the second input end of the auxiliary power supply.

In this solution, two input ends of the auxiliary power supply are both connected to the switch component, and two switch components are both controlled by the second control unit. When either of the two switch components is turned off, the auxiliary power supply stops supplying power to the first control unit.

In a possible implementation, the charging device includes a charging interface. An input end of the charging interface is configured to connect to an output end of the DC-DC circuit, and an output end of the charging interface is configured to connect to a to-be-charged device.

In a possible implementation, the first control unit includes at least one of a digital signal processing DSP circuit, a communication circuit, a sampling circuit, and a drive circuit.

In this solution, the first control unit includes at least one of the DSP circuit, the communication circuit, the sampling circuit, and the drive circuit. Any circuit of the first control unit is powered by the auxiliary power supply. When the switch component is turned off, the auxiliary power supply stops supplying power to any circuit of the first control unit, so that the first control unit no longer consumes electric energy. In this way, the standby power consumption of the charging module is greatly reduced.

In a possible implementation, the switch component includes components such as a gate turn-off thyristor, a metal oxide semiconductor field-effect transistor, an insulated gate bipolar transistor, a gallium nitride transistor, and a silicon carbide transistor.

In a possible implementation, the alternating current power supply may be a single-phase electric power or a three-phase electric power.

### BRIEF DESCRIPTION OF DRAWINGS

To describe the technical solutions in embodiments of this application or in the background more clearly, the following describes the accompanying drawings for describing embodiments of this application or the background.
FIG. 1 is a diagram of a scenario architecture according to an embodiment of this application;
FIG. 2 is a diagram of another scenario architecture according to an embodiment of this application;
FIG. 3 is a schematic of an internal structure of a charging device according to an embodiment of this application;
FIG. 4A is a schematic of an internal structure of a charging module according to an embodiment of this application;
FIG. 4B to FIG. 4D are schematics of connections of a switch component according to an embodiment of this application;
FIG. 4E to FIG. 4G are schematics of other connections of a switch component according to an embodiment of this application;
FIG. 4H is a schematic of an internal structure of another charging module according to an embodiment of this application;
FIG. 4I and FIG. 4J are schematics of other connections of a switch component according to an embodiment of this application;
FIG. 5 is a schematic of an internal structure of another charging module according to an embodiment of this application;
FIG. 6 is a schematic of an internal structure of another charging module according to an embodiment of this application; and
FIG. 7 is a schematic of a charging device according to an embodiment of this application.

### DESCRIPTION OF EMBODIMENTS

In embodiments of this application, "a plurality of" means two or more. In embodiments of this application, "and/or" is used to describe an association relationship between associated objects, and represents three relationships that may exist independently. For example, A and/or B may represent the following case: Only A exists, only B exists, or both A and B exist. A description manner, for example, "at least one (or at least one) of a1, a2, ..., and an", used in embodiments of this application includes a case in which any one of a1, a2, ..., and an exists alone, and also includes any combination of any plurality of a1, a2, ..., and an. Each case may exist alone. For example, a description manner of "at least one of a, b, and c" includes a case of a single a, a single b, a single c, a combination of a and b, a combination of a and c, a combination of b and c, or a combination of a, b, and c.

In embodiments of this application, when an element is considered to be "connected" to another element, the element may be directly connected to the another element, or an element may exist between them. When an element is considered to be "disposed" on another element, the element may be directly disposed on the another element, or an element may exist between them.

The following first describes some technical terms in embodiments of this application by using examples.

### 1. Auxiliary power supply

A topology structure of the auxiliary power supply includes a flyback circuit, a boost (BUCK) circuit, a buck (BOOST) circuit, a buck-boost (BUCK-BOOST) circuit, or the like. A type of the auxiliary power supply is not limited in embodiments of this application. The auxiliary power supply is widely used to supply power to a control circuit, a sensor circuit, a cooling fan, and a safety extra-low voltage circuit (safety extra-low voltage circuit, SELV) circuit.

### 2. Charging device

The charging device is a device that can charge a battery, and may include, for example, a charger, a charging pile, a charging cabinet, or an on-board charger. Being classified by function, the charging device includes a direct current charging device, an alternating current charging device, or the like. A type of the charging device is not specifically limited in this application.

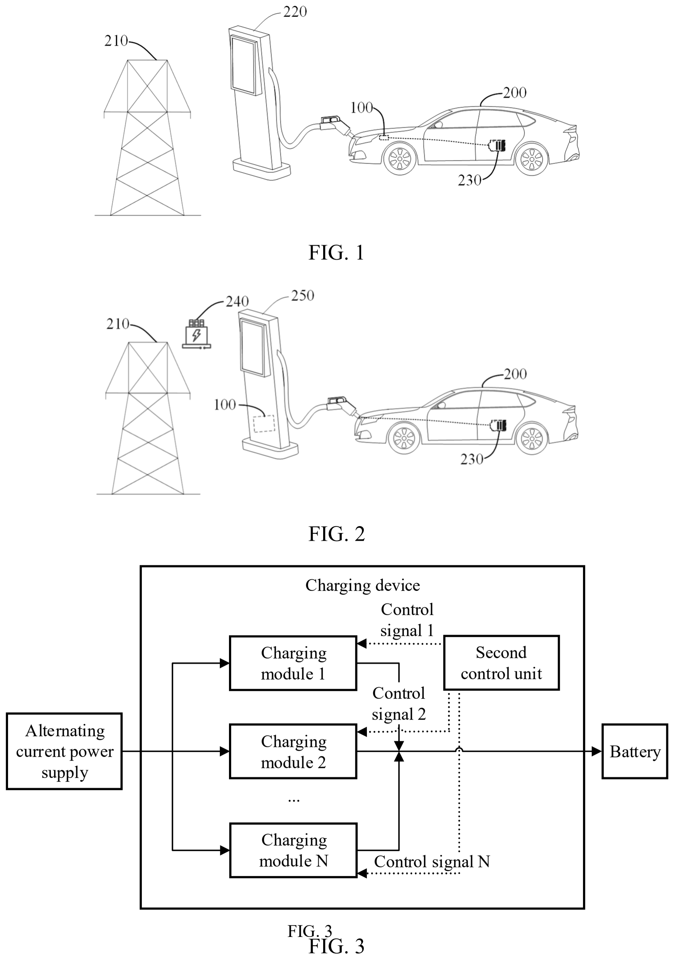

The foregoing technical terms describe some circuits and devices used in a charging scenario by using examples. To better understand the charging scenario and the solutions provided in embodiments of this application, as shown in FIG. 1, an embodiment of this application provides a diagram of an example of a scenario architecture, to show an application scenario of a charging module.

The scenario architecture shown in FIG. 1 includes a charging module 100, a to-be-charged device 200, an alternating current power grid 210, a charging device 220, a battery 230, and the like. The charging module 100 is located in the to-be-charged device 200. The alternating current power grid 210 is connected to the charging device 220, and provides electric energy to the charging device 220. The charging device 220 is connected to the to-be-charged device 200, and provides electric energy to the charging module 100 in the to-be-charged device 200. The charging module 100 processes or converts the received electric energy, and charges the battery 230 in the to-be-charged device 200.

As shown in FIG. 1, the charging device 220 in FIG. 1 is a charging pile, and the to-be-charged device 200 is a new energy vehicle. FIG. 1 shows an example of a scenario in which the charging pile charges the new energy vehicle. Specifically, the alternating current power grid 210 provides electric energy to the charging pile. The charging pile processes (for example, performs voltage bucking on) the electric energy provided by the alternating current power grid 210, and provides electric energy to the new energy vehicle. The charging module 100 inside the new energy vehicle processes and converts (for example, performs voltage conversion or rectification on) the electric energy provided by the charging pile, and provides electric energy to the battery 230 to charge the battery 230.

In addition to the scenario architecture shown in FIG. 1, as shown in FIG. 2, an embodiment of this application further provides a diagram of another scenario architecture, to show an application scenario of a charging module. A difference between the scenario architecture shown in FIG. 2 and the scenario architecture shown in FIG. 1 lies in that the charging module in the scenario architecture shown in FIG. 1 is located in the to-be-charged device, and the charging module in the scenario architecture shown in FIG. 2 is located in a charging device.

The scenario architecture shown in FIG. 2 includes the charging module 100, a to-be-charged device 200, an alternating current power grid 210, a battery 230, a transformer 240, the charging device 250, and the like. The charging module 100 is located in the charging device 250. The alternating current power grid outputs alternating current electric energy to the transformer 240. The transformer 240 converts the received alternating current electric energy, and outputs alternating current electric energy obtained through voltage conversion to the charging device 250. The charging module 100 located inside the charging device 250 converts and processes the received alternating current electric energy, and charges the battery 230 in the to-be-charged device 200.

It may be understood that application scenarios shown in FIG. 1 and FIG. 2 are examples, are mainly intended to help a reader understand the solutions provided in embodiments of this application, and do not constitute a limitation on embodiments of this application. In addition, the charging module 100 shown in FIG. 1 or FIG. 2 may be used in a direct current charging pile, an on-board charger, a high-power charging pile, an ultra-high-power charging pile, a portable charging pile, or the like. The application scenario of the charging module 100 is not limited in this embodiment of this application.

In the foregoing charging scenario shown in FIG. 1 or FIG. 2, when the charging device does not need to charge the battery, the charging module located inside the charging device usually needs to be in a standby state and has large standby power consumption. In view of this, the solutions in embodiments of this application are provided. The following describes embodiments of this application by using examples with reference to the accompanying drawings.

In a possible implementation, a charging device usually includes a plurality of charging modules, so that the charging device can provide higher charging power, and implement functions such as charging power scheduling. For example, FIG. 3 is a schematic of an internal structure of a charging device according to an embodiment of this application.

In FIG. 3, an alternating current power supply, the charging device, and a battery are included. The alternating current power supply is configured to supply power to the charging device, and the charging device is configured to charge the battery. The charging device includes N charging modules, a second control unit, and the like. The second control unit may be a control unit in the charging device in which the N charging modules are located, and N is a positive integer. The charging device may be a charger, a charging pile, a charging cabinet, an on-board charger, or the like.

In a possible implementation, the second control unit is configured to send a control signal to the charging module, to control a working status of the charging module.

For example, the second control unit sends a control signal 1 to a charging module 1, where the control signal 1 indicates the charging module 1 to output 5 kW of charging power; the second control unit sends a control signal 2 to a charging module 2, where the control signal 2 indicates the charging module 2 to stop outputting electric energy; or the second control unit sends a control signal N to a charging module N, where the control signal N indicates the charging module N to start to output electric energy.

The second control unit sends the control signal to each of the N charging modules, and controls the working status of each charging module, to control charging power of the battery. For example, the second control unit controls some charging modules to enter a standby state or stops the charging module from outputting electric energy, to reduce the charging power of the battery.

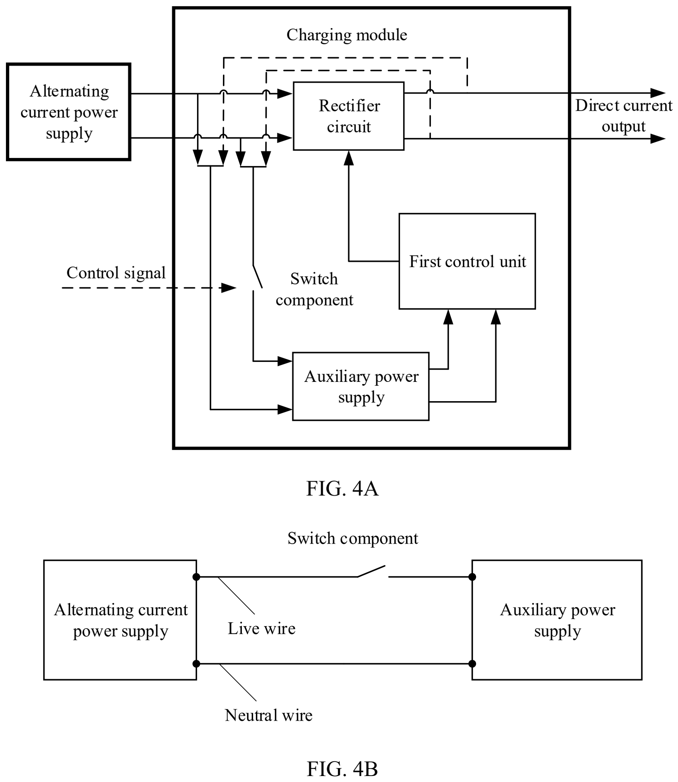

When the charging module enters the standby state or does not need to output electric energy, to reduce standby power consumption of the charging module as much as possible, as shown in FIG. 4A, an embodiment of this application provides a charging module.

FIG. 4A is a schematic of an internal structure of a charging module according to an embodiment of this application. As shown in FIG. 4A, the charging module includes a switch component, an auxiliary power supply, a first control unit, a rectifier circuit, and the like. An input end of the charging module is connected to an output end of an alternating current power supply, and a current output by the charging module is a direct current. The switch component includes a first end and a second end, and the switch component is connected to the output end of the alternating current power supply (which is equivalent to an input end of the rectifier circuit) or an output end of the rectifier circuit. The second end of the switch component is connected to an input end of the auxiliary power supply, an output end of the auxiliary power supply is connected to an input end of the first control unit, and an output end of the first control unit is connected to the rectifier circuit.

The switch component is a power electronic component that can be controlled, by using a control signal, to be turned on or turned off. For example, an electromagnetic relay, a gate turn-off thyristor, a metal oxide semiconductor field-effect transistor, an insulated gate bipolar transistor, a gallium nitride transistor, and a silicon carbide transistor are all switch components.

The auxiliary power supply shown in FIG. 4A is configured to supply power to the first control unit. The first control unit includes at least one circuit of a control circuit, a communication circuit, a sampling circuit, and a drive circuit. The control circuit is, for example, a control unit including one or more hardware circuits. The hardware circuit may include an application-specific integrated circuit (application-specific integrated circuit, ASIC), a programmable logic device (programmable logic device, PLD), a field programmable gate array (field programmable gate array, FPGA), a digital signal processing (digital signal processing, DSP), a single-chip microcomputer, or the like. A specific implementation of the first control circuit is not limited in this application. The communication circuit is configured to communicate with an upper-level control unit, and the upper-level control unit may be, for example, the second control unit shown in FIG. 3. The sampling circuit may be configured to: sample an input voltage and an output voltage of the rectifier circuit, and upload sampled data by using a communication unit, to determine whether the input voltage and the output voltage of the rectifier circuit are normal. The drive circuit may be configured to control a working status, the output voltage, or the like of the rectifier circuit. A quantity of components of a same type included in the first control unit is not limited in this application. For example, the first control unit may include L control circuits, M sampling circuits, P drive circuits, and K auxiliary power supplies, where L, M, P, and K are all integers greater than 1.

For example, the first control unit shown in FIG. 4A may be configured to: control the working status of the rectifier circuit, collect voltage data of the rectifier circuit, and send the voltage data to the upper-level control unit. A function that can be implemented by the first control unit is not limited in this embodiment of this application, and a connection relationship between circuits included in the first control unit is not limited in this application either.

The rectifier circuit may be the rectifier circuit described in the foregoing technical terms. For example, the rectifier circuit may include a half-wave rectifier circuit, a full-wave rectifier circuit, a bridge rectifier circuit, a voltage doubler rectifier circuit, and the like, and may further include a power factor correction (power factor correction, PFC) circuit. A type of the rectifier circuit is not specifically limited in this application.

For example, the rectifier circuit shown in FIG. 4A is configured to convert an alternating current input by the alternating current power supply into a direct current.

In the solution provided in this embodiment of this application, the first control unit is not used to control the switch component shown in FIG. 4A. The control signal used to control the switch component directly comes from the upper-level control unit, and the upper-level control unit is, for example, the second control unit shown in FIG. 3. The upper-level control unit may also be understood as a control unit of a charging device in which the charging module is located. For example, when the charging module is located in a charging pile, the upper-level control unit may be a control unit of the charging pile.

In this solution, the control signal of the switch component comes from a control unit outside the charging module. After entering a standby state, the charging module controls, by using the control unit outside the charging module, the switch component to be turned off, and the auxiliary power supply stops supplying power to the first control unit, making the charging module no longer consume electric energy. The switch component is controlled, by using the control unit outside the charging module, to be turned on, making the charging module enter a working state or start to output electric energy. It can be learned that, when the charging module enters the standby state or stops outputting electric energy, the charging module does not need to consume electric energy, and the charging module can also be ensured to enter the working state again, so that standby power consumption of the charging module is greatly reduced.

In addition, it can be learned from the foregoing related descriptions that the switch component may include a relay, the GTO transistor, the MOSFET transistor, the IGBT transistor, the gallium nitride transistor, the silicon carbide transistor, and the like. When this type of switch component is turned off, no additional electric energy is required to maintain a turn-off state of this type of switch component. In this way, the standby power consumption of the charging module shown in FIG. 4A can be further reduced.

During actual application, the output end of the alternating current power supply, the input end of the rectifier circuit, the output end of the rectifier circuit, the input end of the auxiliary power supply, the output end of the auxiliary power supply, and the like each include two ports.

In a possible implementation, the output end of the alternating current power supply includes a first output end and a second output end. The input end of the rectifier circuit includes a first input end and a second input end. The output end of the rectifier circuit also includes a first output end and a second output end. The input end of the auxiliary power supply includes a first input end and a second input end. The output end of the auxiliary power supply includes a first output end and a second output end. It should be understood that the first output end, the second output end, the first input end, and the second input end each are a wire or a strand of wires.

For example, when the first output end of the alternating current power supply is connected to the first input end of the rectifier circuit, and the second output end of the alternating current power supply is connected to the second input end of the rectifier circuit, a current loop may be formed. It should not be understood that the current loop can be formed by only connecting the first output end of the alternating current power supply to the first input end of the rectifier circuit.

For example, the first output end of the rectifier circuit is a positive electrode, and the second output end of the rectifier circuit is a negative electrode. Alternatively, the first output end of the rectifier circuit is a negative electrode, and the second output end of the rectifier circuit is a positive electrode.

In a possible implementation, the switch component in FIG. 4A is connected between the output end of the alternating current power supply and the input end of the auxiliary power supply. Refer to FIG. 4B to FIG. 4D. FIG. 4B to FIG. 4D are schematics of connections of a switch component according to an embodiment of this application, and show examples of connection relationships of the switch component between the output end of the alternating current power supply and the input end of the auxiliary power supply.

In a possible implementation, the switch component is connected to a live wire of the alternating current power supply. As shown in FIG. 4B, the first end of the switch component is connected to the first output end (live wire) of the alternating current power supply, and the second end of the switch component is connected to the first input end of the auxiliary power supply.

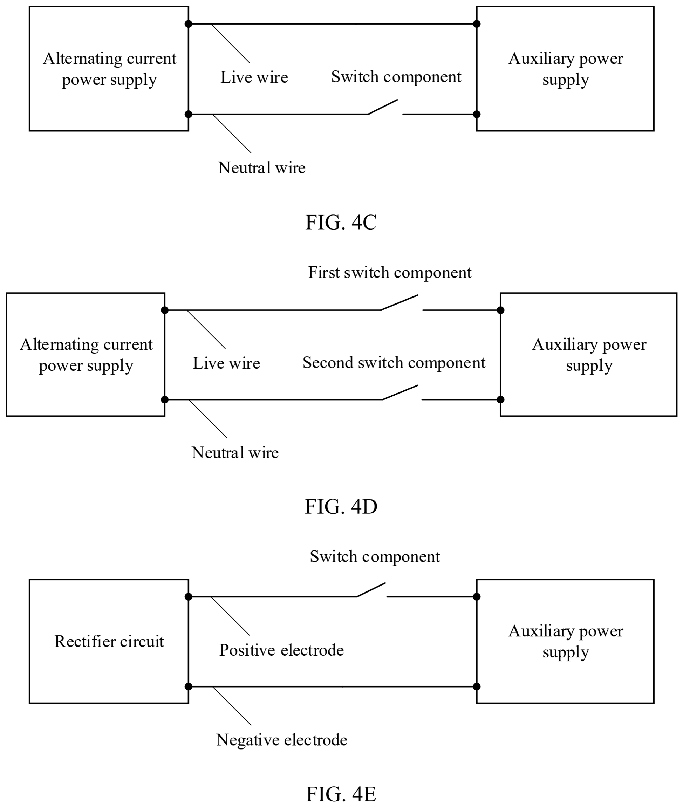

In a possible implementation, the switch component is connected to a neutral wire of the alternating current power supply. As shown in FIG. 4C, the first end of the switch component is connected to the second output end (neutral wire) of the alternating current power supply, and the second end of the switch component is connected to the second input end of the auxiliary power supply.

In another possible implementation, the switch component includes a first switch component and a second switch component, and the first switch component and the second switch component are respectively connected to a live wire and a neutral wire of the alternating current power supply. As shown in FIG. 4D, the switch component includes the first switch component and the second switch component. A first end of the first switch component is connected to the first output end (live wire) of the alternating current power supply, and a second end of the first switch component is connected to the first input end of the auxiliary power supply. A first end of the second switch component is connected to the second output end (neutral wire) of the alternating current power supply, and a second end of the second switch component is connected to the second input end of the auxiliary power supply.

In another possible implementation, the switch component in FIG. 4A is connected between the output end of the rectifier circuit and the input end of the auxiliary power supply. Refer to FIG. 4E to FIG. 4G. FIG. 4E to FIG. 4G are schematics of other connections of a switch component according to an embodiment of this application, and show examples of connection relationships of the switch component between the output end of the rectifier circuit and the input end of the auxiliary power supply.

In a possible implementation, the switch component is connected to a positive electrode of output of the rectifier circuit. As shown in FIG. 4E, the first end of the switch component is connected to the first output end (positive electrode) of the rectifier circuit, and the second end of the switch component is connected to the first input end of the auxiliary power supply.

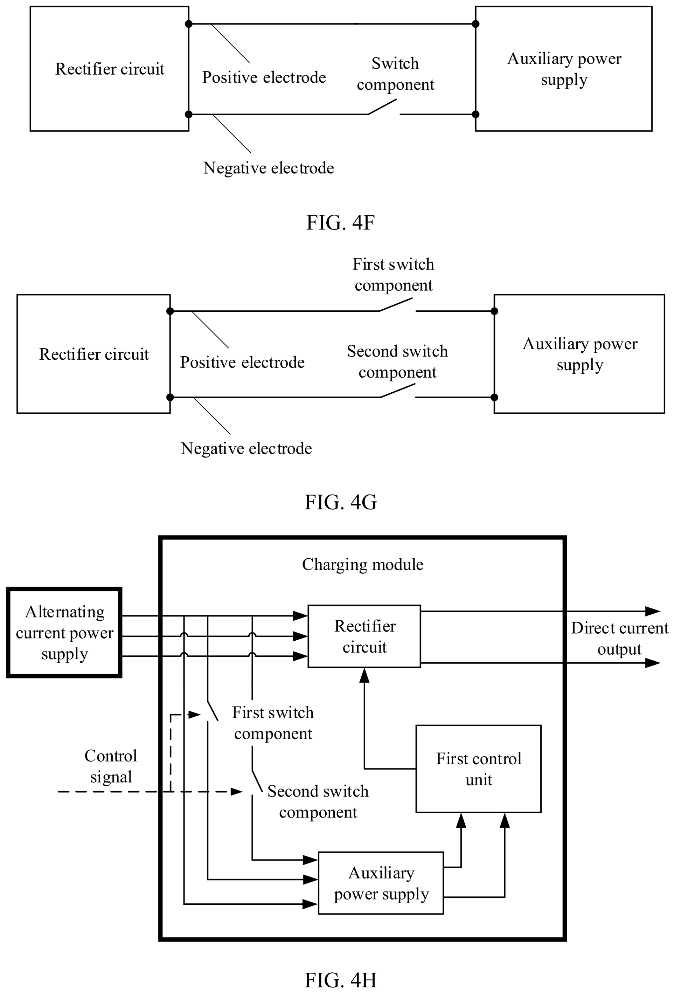

In a possible implementation, the switch component is connected to a negative electrode of output of the rectifier circuit. As shown in FIG. 4F, the first end of the switch component is connected to the second output end (negative electrode) of the rectifier circuit, and the second end of the switch component is connected to the second input end of the auxiliary power supply.

In another possible implementation, the switch component includes a first switch component and a second switch component, and the first switch component and the second switch component are respectively connected to a positive electrode and a negative electrode of output of the rectifier circuit. As shown in FIG. 4G, the switch component includes the first switch component and the second switch component. A first end of the first switch component is connected to the first output end (positive electrode) of the rectifier circuit, and a second end of the first switch component is connected to the first input end of the auxiliary power supply. A first end of the second switch component is connected to the second output end (negative electrode) of the rectifier circuit, and a second end of the second switch component is connected to the second input end of the auxiliary power supply. In this embodiment of this application, a function of the switch component is to turn on or cut off power supply of the alternating current power supply to the auxiliary power supply. A specific connection relationship of the switch component between the rectifier circuit and the auxiliary power supply is not limited.

It may be understood that the first switch component and the second switch component are both controlled by the upper-level control unit. When the first switch component and the second switch component are simultaneously turned on, the alternating current power supply or the rectifier circuit starts to supply power to the auxiliary power supply, the auxiliary power supply processes and converts received electric energy, and outputs electric energy to supply power to the first control unit, and the first control unit controls the rectifier circuit or the like to start to work (which is equivalent to the charging module starting to work). When the first switch component and/or the second switch component are/is turned off, the alternating current power supply or the rectifier circuit stops supplying power to the auxiliary power supply, the auxiliary power supply also stops supplying power to the first control unit, and the charging module stops working.

As shown in FIG. 4H, an embodiment of this application further provides a schematic of an internal structure of another charging module. The charging module in FIG. 4H includes a first switch component, a second switch component, an auxiliary power supply, a first control unit, a rectifier circuit, and the like. An input end of the charging module is connected to an output end of an alternating current power supply, and a current output by the charging module is a direct current. The first switch component and the second switch component each include a first end and a second end, and the first end of the first switch component and the first end of the second switch component are connected to the output end of the alternating current power supply. The second end of the first switch component and the second end of the second switch component are connected to an input end of the auxiliary power supply, an output end of the auxiliary power supply is connected to an input end of the first control unit, and an output end of the first control unit is connected to the rectifier circuit.

For related descriptions of the switch component, the auxiliary power supply, the first control unit, and the rectifier circuit, refer to the related descriptions in FIG. 4A. Details are not described herein again.

During actual application, the output end of the alternating current power supply, an input end of the rectifier circuit, and the input end of the auxiliary power supply each include three ports, and an output end of the rectifier circuit and the output end of the auxiliary power supply each include two ports.

In a possible implementation, the output end of the alternating current power supply includes a first output end, a second output end, and a third output end. For example, the alternating current power supply is three-phase four-wire or the alternating current power supply is three-phase five-wire, and the first output end, the second output end, and the third output end are live wires with a phase difference of 120 degrees. The input end of the rectifier circuit includes a first input end, a second input end, and a third input end. The output end of the rectifier circuit includes a first output end and a second output end. The input end of the auxiliary power supply includes a first input end, a second input end, and a third input end. The output end of the auxiliary power supply includes a first output end and a second output end. It should be understood that the first output end, the second output end, the third output end, the first input end, the second input end, and the third input end each are a wire or a strand of wires.

For example, when the first output end of the alternating current power supply is connected to the first input end of the rectifier circuit, the second output end of the alternating current power supply is connected to the second input end of the rectifier circuit, and the third output end of the alternating current power supply is connected to the third input end of the rectifier circuit, a current loop may be formed. It should not be understood that the current loop can be formed by only connecting the first output end of the alternating current power supply to the first input end of the rectifier circuit.

For example, the first output end of the rectifier circuit is a positive electrode, and the second output end of the rectifier circuit is a negative electrode. Alternatively, the first output end of the rectifier circuit is a negative electrode, and the second output end of the rectifier circuit is a positive electrode.

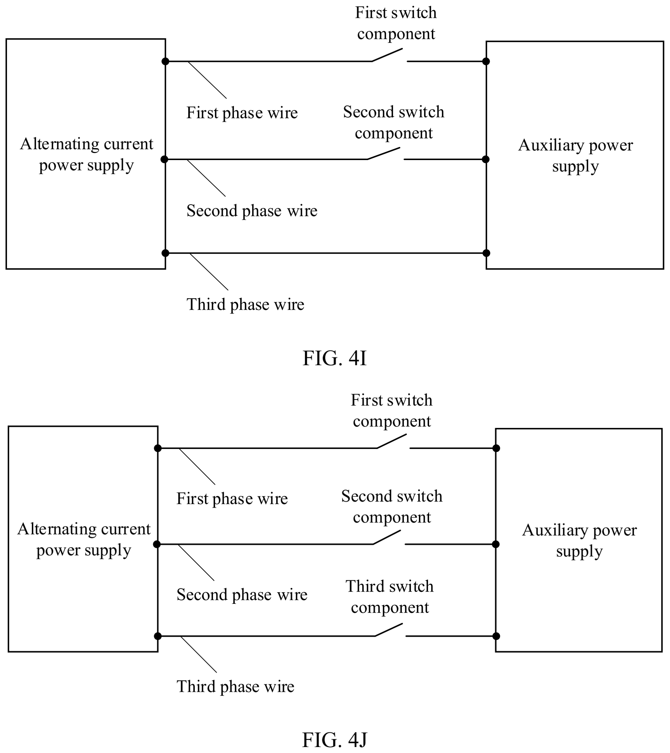

In a possible implementation, the first switch component and the second switch component in FIG. 4H are connected between the output end of the alternating current power supply and the input end of the auxiliary power supply. Refer to FIG. 4I and FIG. 4J. FIG. 4I and FIG. 4J are schematics of connections of a switch component according to an embodiment of this application, and show examples of connection relationships of the switch component between the output end of the alternating current power supply and the input end of the auxiliary power supply.

In a possible implementation, the first switch component and the second switch component are respectively connected to a first phase wire and a second phase wire of the alternating current power supply. As shown in FIG. 4I, the switch component includes the first switch component and the second switch component. The first end of the first switch component is connected to the first output end (first phase wire) of the alternating current power supply, and the second end of the first switch component is connected to the first input end of the auxiliary power supply. The first end of the second switch component is connected to the second output end (second phase wire) of the alternating current power supply, and the second end of the second switch component is connected to the second input end of the auxiliary power supply. When the switch component includes the first switch component and the second switch component, for another implementation in which the first switch component and the second switch component are connected to the output end of the alternating current power supply, refer to FIG. 4I. Details are not described herein again.

In another possible implementation, the switch component includes the first switch component, the second switch component, and a third switch component. As shown in FIG. 4J, the switch component includes the first switch component, the second switch component, and the third switch component. The first end of the first switch component is connected to the first output end (first phase wire) of the alternating current power supply, and the second end of the first switch component is connected to the first input end of the auxiliary power supply. The first end of the second switch component is connected to the second output end (second phase wire) of the alternating current power supply, and the second end of the second switch component is connected to the second input end of the auxiliary power supply. A first end of the third switch component is connected to the third output end (third phase wire) of the alternating current power supply, and a second end of the third switch component is connected to the third input end of the auxiliary power supply.

It may be understood that the first switch component, the second switch component, and the third switch component are all controlled by an upper-level control unit. When at least two of the first switch component, the second switch component, and the third switch component are turned on, the alternating current power supply or the rectifier circuit starts to supply power to the auxiliary power supply, the auxiliary power supply processes and converts received electric energy, and outputs electric energy to supply power to the first control unit, and the first control unit controls the rectifier circuit or the like to start to work (which is equivalent to the charging module starting to work). When at least two of the first switch component, the second switch component, and the third switch component are turned off, the alternating current power supply or the rectifier circuit stops supplying power to the auxiliary power supply, the auxiliary power supply also stops supplying power to the first control unit, and the charging module stops working.

The foregoing content separately lists specific implementations in which the alternating current power supply is a single-phase alternating current and a three-phase alternating current. During specific implementation, a type and a standard of the alternating current power supply are not limited in this embodiment of this application.

In a possible implementation, the charging module shown in FIG. 4A is combined with a DC/DC circuit to complete charging of a to-be-charged device. A specific combination manner of the charging module and the DC/DC circuit is not limited in this application.

For example, as shown in FIG. 3, one charging device includes a plurality of charging modules. An output end of each charging module is connected to one DC/DC circuit. For example, an output end of a charging module 1 is connected to a DC/DC circuit 1, an output end of a charging module 2 is connected to a DC/DC circuit 2, and an output end of a charging module N is connected to a DC/DC circuit N. Output ends of N DC/DC circuits are connected in parallel, and electric energy output by a parallel circuit is used to charge the to-be-charged device.

For example, as shown in FIG. 3, one charging device includes a plurality of charging modules. Output ends of the plurality of charging modules are connected in parallel, and electric energy obtained by a parallel circuit is input to the DC/DC circuit. The DC/DC circuit processes and converts the obtained electric energy, and is configured to charge a battery.

When the charging module shown in FIG. 4A enters a standby state or does not need to output electric energy, a control unit of a device in which the charging module is located may directly send a control signal to the switch component inside the charging module, where the control signal can indicate the switch component to be turned on or turned off. When the control signal indicates the switch component to be turned on, the switch component is turned on, the auxiliary power supply starts to supply power to the first control unit, the first control unit and the rectifier circuit start to work, and the charging module enters a working state or starts to output electric energy. When the control signal indicates the switch component to be turned off, the switch component is turned off, the auxiliary power supply stops supplying power to the first control unit, and the first control unit stops working and no longer consumes electric energy. When the charging module enters the standby state or stops outputting electric energy, the rectifier circuit stops working. The switch component is controlled to be turned off, so that the auxiliary power supply stops supplying power to the first control unit, and the first control unit no longer consumes electric energy. In this way, standby power consumption of the charging module is greatly reduced, and an energy waste of the charging module in a standby process can be effectively reduced.

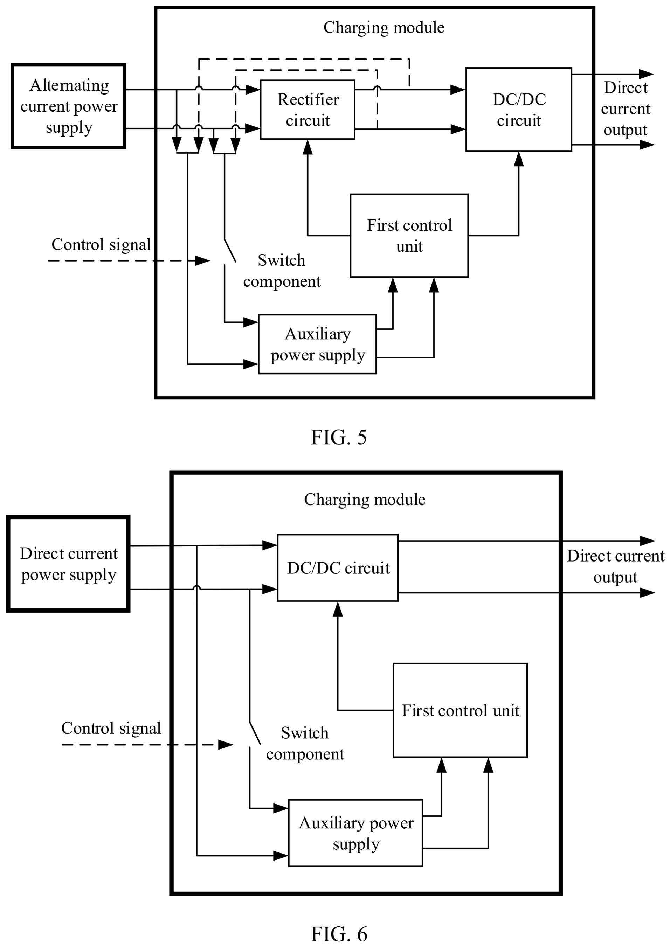

FIG. 5 is a schematic of an internal structure of another charging module according to an embodiment of this application. A difference between the charging module shown in FIG. 5 and the charging module shown in FIG. 4A lies in that the charging module shown in FIG. 5 further includes a DC/DC circuit in addition to a switch component, an auxiliary power supply, a first control unit, and a rectifier circuit. An input end of the charging module shown in FIG. 5 is connected to an output end of an alternating current power supply, and an output current is a direct current. In addition, an output end of the charging module shown in FIG. 5 may be directly connected to a battery and charge the battery. The switch component includes a first end and a second end. When the rectifier circuit and the alternating current power supply are collectively referred to as a target circuit, the first end of the switch component is connected to an output end of the target circuit. For example, the switch component may be connected to the output end of the alternating current power supply (which is equivalent to an input end of the rectifier circuit) or an output end of the rectifier circuit. The second end of the switch component is connected to an input end of the auxiliary power supply, an output end of the auxiliary power supply is connected to an input end of the first control unit, and an output end of the first control unit is connected to the rectifier circuit and the DC/DC circuit.

For related descriptions of the switch component, the auxiliary power supply, the rectifier circuit, and the DC/DC circuit, refer to the corresponding content in FIG. 4A. Details are not described herein again.

A difference between the first control unit shown in FIG. 5 and the first control unit shown in FIG. 4A lies in that, in addition to being configured to: control a working status of the rectifier circuit, collect voltage data of the rectifier circuit, and send the voltage data to an upper-level control unit, the first control unit shown in FIG. 5 may be further configured to: control a working status of the DC/DC circuit, collect voltage data of the DC/DC circuit, and send the voltage data to the upper-level control unit. The upper-level control unit may include a control unit in a charging device in which the charging module is located. A function that can be implemented by the first control unit is not limited in this embodiment of this application, and a connection relationship between circuits included in the first control unit is not limited in this application either. For descriptions of a part about the first control unit other than the foregoing difference, refer to the foregoing descriptions of the first control unit in FIG. 4A. Details are not described herein again.

In this embodiment of this application, the charging module shown in FIG. 5 is described by using a two-phase alternating current power supply as an example. For a specific implementation in which the alternating current power supply is a three-phase electric power, refer to the related descriptions in FIG. 4H. Details are not described herein again.

In a possible implementation, the output end of the alternating current power supply, the input end of the rectifier circuit, the output end of the rectifier circuit, the input end of the auxiliary power supply, the output end of the auxiliary power supply, and the like each include two ports. For a specific implementation, refer to the related descriptions in FIG. 4A. Details are not described herein again.

In a possible implementation, the switch component in FIG. 5 is connected between the output end of the alternating current power supply and the input end of the auxiliary power supply. For a specific implementation, refer to the related descriptions of connection manners of the switch component in FIG. 4B and FIG. 4C. Details are not described herein again.

In another possible implementation, the switch component shown in FIG. 5 includes a first switch component and a second switch component. Both the first switch component and the second switch component are connected between the output end of the alternating current power supply and the input end of the auxiliary power supply. For a specific implementation, refer to the related descriptions of a connection manner of the switch component in FIG. 4D. Details are not described herein again.

In a possible implementation, the switch component in FIG. 5 is connected between the output end of the rectifier circuit and the input end of the auxiliary power supply. For a specific implementation, refer to the related descriptions of connection manners of the switch component in FIG. 4E and FIG. 4F. Details are not described herein again.

In another possible implementation, the switch component shown in FIG. 5 includes a first switch component and a second switch component. Both the first switch component and the second switch component are connected between the output end of the rectifier circuit and the input end of the auxiliary power supply. For a specific implementation, refer to the related descriptions of a connection manner of the switch component in FIG. 4G. Details are not described herein again.

It may be understood that the first switch component and the second switch component are both controlled by the upper-level control unit. When the first switch component and the second switch component are simultaneously turned on, the alternating current power supply or the rectifier circuit starts to supply power to the auxiliary power supply, the auxiliary power supply processes and converts received electric energy, and outputs electric energy to supply power to the first control unit, and the first control unit controls the rectifier circuit, the DC/DC circuit, and the like to start to work (which is equivalent to the charging module starting to work). When the first switch component and/or the second switch component are/is turned off, the alternating current power supply or the rectifier circuit stops supplying power to the auxiliary power supply, the auxiliary power supply also stops supplying power to the first control unit, and the charging module stops working.

In the solution shown in FIG. 5, a control signal of the switch component comes from a control unit outside the charging module. After entering a standby state, the charging module controls, by using the control unit outside the charging module, the switch component to be turned off, and the auxiliary power supply stops supplying power to the first control unit, making the charging module no longer consume electric energy. The switch component is controlled, by using the control unit outside the charging module, to be turned on, making the charging module enter a working state or start to output electric energy. It can be learned that, when the charging module enters the standby state or stops outputting electric energy, the charging module does not need to consume electric energy, and the charging module can also be ensured to enter the working state again, so that standby power consumption of the charging module is greatly reduced.

The foregoing content describes a specific implementation of the charging module shown in FIG. 5 by using a single-phase alternating current power supply as an example. During specific implementation, a type and a standard of the alternating current power supply are not limited in this embodiment of this application.

FIG. 6 is a schematic of an internal structure of another charging module according to an embodiment of this application. As shown in FIG. 6, the charging module includes a switch component, an auxiliary power supply, a first control unit, a DC/DC circuit, and the like. An input end of the charging module is connected to an output end of a direct current power supply, and a current output by the charging module is a direct current. The switch component includes a first end and a second end, and the first end of the switch component is connected to an input end of the DC/DC circuit. The second end of the switch component is connected to an input end of the auxiliary power supply, an output end of the auxiliary power supply is connected to an input end of the first control unit, and an output end of the first control unit is connected to the DC/DC circuit.

For related descriptions of the switch component, the auxiliary power supply, and the DC/DC circuit, refer to the corresponding content in FIG. 4A. Details are not described herein again.

A difference between the first control unit shown in FIG. 6 and the first control unit shown in FIG. 4A lies in that the output end of the first control unit shown in FIG. 6 is connected to the DC/DC circuit. Therefore, the first control unit shown in FIG. 6 may be configured to: control a working status of the DC/DC circuit, collect voltage data of the DC/DC circuit, and send the voltage data to an upper-level control unit. The upper-level control unit may include a control unit in a charging device in which the charging module is located. A function that can be implemented by the first control unit is not limited in this embodiment of this application, and a connection relationship between circuits included in the first control unit is not limited in this application either. For descriptions of a part about the first control unit other than the foregoing difference, refer to the foregoing descriptions of the first control unit in FIG. 4A. Details are not described herein again.

In this embodiment of this application, the charging module shown in FIG. 6 is described by using a two-phase alternating current power supply as an example. For a specific implementation in which the alternating current power supply is a three-phase electric power, refer to the related descriptions in FIG. 4H. Details are not described herein again.

In a possible implementation, the output end of the direct current power supply, the input end of the auxiliary power supply, the output end of the auxiliary power supply, and the like each include two ports. For a specific implementation, refer to the related descriptions in FIG. 4A. Details are not described herein again.

In a possible implementation, the switch component in FIG. 6 is connected between the output end of the direct current power supply and the input end of the auxiliary power supply. For a specific implementation, refer to the related descriptions of connection manners of the switch component in FIG. 4E and FIG. 4F. Details are not described herein again.

In another possible implementation, the switch component shown in FIG. 6 includes a first switch component and a second switch component. Both the first switch component and the second switch component are connected between the output end of the direct current power supply and the input end of the auxiliary power supply. For a specific implementation, refer to the related descriptions of a connection manner of the switch component in FIG. 4G. Details are not described herein again.

It may be understood that the first switch component and the second switch component are both controlled by the upper-level control unit. When the first switch component and the second switch component are simultaneously turned on, the direct current power supply starts to supply power to the auxiliary power supply, the auxiliary power supply processes and converts received electric energy, and outputs electric energy to supply power to the first control unit, and the first control unit controls the DC/DC circuit or the like to start to work (which is equivalent to the charging module starting to work). When the first switch component and/or the second switch component are/is turned off, the alternating current power supply or a rectifier circuit stops supplying power to the auxiliary power supply, the auxiliary power supply also stops supplying power to the first control unit, and the charging module stops working.

In the solution shown in FIG. 6, a control signal of the switch component comes from a control unit outside the charging module. After entering a standby state, the charging module controls, by using the control unit outside the charging module, the switch component to be turned off, and the auxiliary power supply stops supplying power to the first control unit, making the charging module no longer consume electric energy. The switch component is controlled, by using the control unit outside the charging module, to be turned on, making the charging module enter a working state or start to output electric energy. It can be learned that, when the charging module enters the standby state or stops outputting electric energy, the charging module does not need to consume electric energy, and the charging module can also be ensured to enter the working state again, so that standby power consumption of the charging module is greatly reduced.

The foregoing content describes a specific implementation of the charging module shown in FIG. 6 by using a single-phase alternating current power supply as an example. During specific implementation, a type and a standard of the alternating current power supply are not limited in this embodiment of this application.

When the charging module shown in FIG. 4A, FIG. 4H, FIG. 5, or FIG. 6 enters the standby state or does not need to output electric energy, the control unit of the device in which the charging module is located may directly send the control signal to the switch component inside the charging module, where the control signal can indicate the switch component to be turned on or turned off. When the control signal indicates the switch component to be turned on, the switch component is turned on, the auxiliary power supply starts to supply power to the first control unit, the first control unit and the rectifier circuit start to work, and the charging module enters the working state or starts to output electric energy. When the control signal indicates the switch component to be turned off, the switch component is turned off, the auxiliary power supply stops supplying power to the first control unit, and the first control unit stops working and no longer consumes electric energy. When the charging module enters the standby state or stops outputting electric energy, the rectifier circuit stops working. The switch component is controlled to be turned off, so that the auxiliary power supply stops supplying power to the first control unit, and the first control unit no longer consumes electric energy. In this way, the standby power consumption of the charging module is greatly reduced, and the energy waste of the charging module in the standby process can be effectively reduced.

The charging module shown in FIG. 4A, FIG. 4H, FIG. 5, or FIG. 6 may be used in the charging scenario in FIG. 1 or FIG. 2, and may be further used in the charging device shown in FIG. 3.

In another possible implementation, when charging power of the to-be-charged device is adjusted, some charging modules need to enter the standby state or stop outputting electric energy. When the charging module shown in FIG. 4A, FIG. 4H, FIG. 5, or FIG. 6 enters the standby state or does not need to output electric energy, the control unit of the device in which the charging module is located may directly send the control signal to the switch component inside the charging module, where the control signal can indicate the switch component to be turned on or turned off. When the control signal indicates the switch component to be turned on, the switch component is turned on, the auxiliary power supply starts to supply power to the first control unit, the first control unit and the rectifier circuit start to work, and the charging module enters the working state or starts to output electric energy. When the control signal indicates the switch component to be turned off, the switch component is turned off, the auxiliary power supply stops supplying power to the first control unit, and the first control unit stops working and no longer consumes electric energy. When the charging module enters the standby state or stops outputting electric energy, the rectifier circuit stops working. The switch component is controlled to be turned off, so that the auxiliary power supply stops supplying power to the first control unit, and the first control unit no longer consumes electric energy. In this way, the standby power consumption of the charging module that enters the standby state or stops outputting electric energy is greatly reduced.

For example, it is assumed that the charging device shown in FIG. 3 includes 10 charging modules, output power of each charging module is 5 kW, and total output power of the charging device shown in FIG. 3 is 50 kW. If the charging power of the battery needs to be adjusted from 50 kW to 20 kW, the second control unit needs to control six working charging modules to enter the standby state or stop outputting electric energy. Standby power consumption of the charging modules that are indicated to enter the standby state or stop outputting electric energy is greatly reduced.

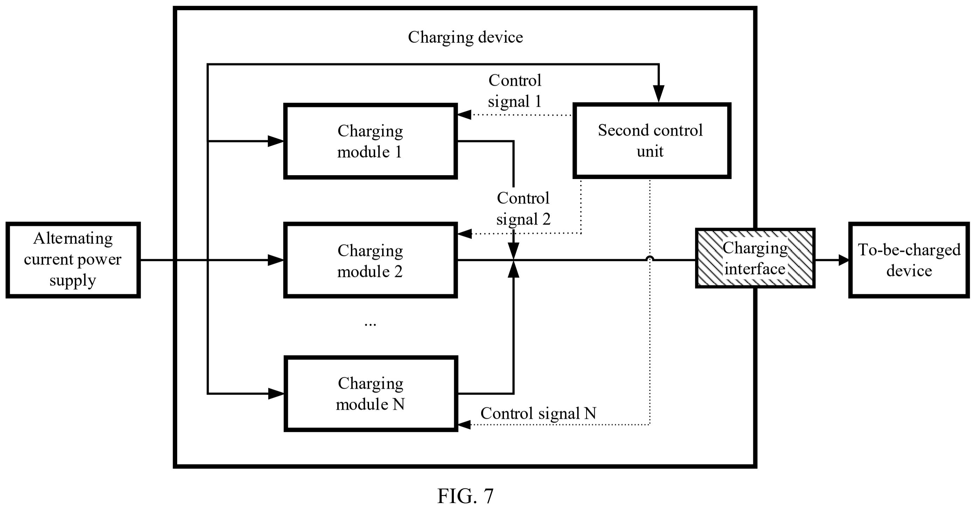

An embodiment of this application further provides a charging device. For example, refer to FIG. 7. FIG. 7 is a schematic of a charging device according to an embodiment of this application. The charging device includes charging modules, a charging interface, a second control unit, and the like. The second control unit is, for example, the second control unit shown in FIG. 3, or the upper-level control unit mentioned in the foregoing descriptions. The charging module may include the charging module shown in FIG. 4A, FIG. 4H, FIG. 5, or FIG. 6.

As shown in FIG. 7, an input end of the charging device is connected to an alternating current power supply, and the alternating current power supply is configured to supply electric energy to the charging device. The charging interface of the charging device is connected to a to-be-charged device, to charge a battery in the to-be-charged device.

The charging device may include the second control unit, N charging modules, and the like, where N is a positive integer. The electric energy received by the charging device is separately used to supply power to the N charging modules and the second control unit. The second control unit is configured to send a control signal to the charging module, to control a working status of the charging module.

For example, as shown in FIG. 4A, FIG. 4H, FIG. 5, or FIG. 6, the charging module includes a switch component, an auxiliary power supply, a first control unit, and the like. The second control unit is configured to send the control signal to the switch component in the charging module, to make the switch component in the charging module turn on or turn off. When the switch component is turned on, the auxiliary power supply supplies power to the first control unit, and the charging module enters a working state and starts to output electric energy. When the switch component is turned off, the auxiliary power supply stops supplying power to the first control unit, and the charging module has no another energy consumption unit, so that standby power consumption of the charging module is greatly reduced.

When the charging device enters a standby state, the second control unit sends control signals to the N charging modules. The control signal is used to control the switch component in the charging module to be turned off, to make the auxiliary power supply stop supplying power to the first control unit, so that the standby power consumption of the charging module is greatly reduced. To enable the charging device to receive a control instruction from a customer, the second control unit may enter a standby state with specific standby power consumption. Standby power consumption of the charging device that enters the standby state is reduced to only the standby power consumption of the second control unit. Therefore, overall standby power consumption of the charging device shown in FIG. 7 can be greatly reduced.

When the charging device shown in FIG. 7 performs power scheduling, standby power consumption of some charging modules that enter a standby state is greatly reduced, thereby reducing a waste of power resources of the charging device, and improving energy conversion efficiency of the charging device.

For example, it is assumed that the charging device shown in FIG. 7 includes 10 charging modules, output power of each charging module is 5 kW, and total output power of the charging device shown in FIG. 7 is 50 kW. If charging power of the battery needs to be adjusted from 50 kW to 20 kW, the second control unit needs to control six working charging modules to enter the standby state or stop outputting electric energy. Standby power consumption of the charging modules that are indicated to enter the standby state or stop outputting electric energy is greatly reduced.

For a specific implementation and a working principle of the charging module in the charging device, refer to the related descriptions of the charging module in FIG. 4A, FIG. 4H, FIG. 5, FIG. 6, and the possible implementations thereof. Details are not described herein again.

The terms such as "first" and "second" in this application are used to distinguish between same or similar items with basically same roles and functions. It should be understood that there is no logical or time-sequence dependency between "first", "second", and "nth", and a quantity and an execution sequence are not limited. It should also be understood that, although the following descriptions use the terms such as "first" and "second" to describe various elements, these elements should not be limited by the terms. These terms are simply used to distinguish one element from another.

## Claims

1. A charging device, wherein the charging device comprises a charging module and a second control unit, and the charging module comprises a switch component, an auxiliary power supply, a first control unit, and a rectifier circuit;
the auxiliary power supply is configured to supply power to the first control unit, the first control unit is configured to control the rectifier circuit, and the rectifier circuit is configured to convert an alternating current input by an alternating current power supply into a direct current;
a first end of the switch component is configured to connect to an output end of the rectifier circuit or an output end of the alternating current power supply, and a second end of the switch component is configured to connect to an input end of the auxiliary power supply;
the second control unit is configured to control turn-on and turn-off of the switch component;
the auxiliary power supply supplies power to the first control unit in response to turn-on of the switch component; and
the auxiliary power supply stops, in response to turn-off of the switch component, supplying power to the first control unit.

2. The charging device according to claim 1, wherein the output end of the rectifier circuit or the output end of the alternating current power supply comprises a first output end and a second output end, the input end of the auxiliary power supply comprises a first input end and a second input end, and the switch component comprises a first switch component; and
a first end of the first switch component is configured to connect to the first output end of the rectifier circuit or the first output end of the alternating current power supply, and a second end of the first switch component is configured to connect to the first input end of the auxiliary power supply.

3. The charging device according to claim 2, wherein the switch component comprises a second switch component; and
a first end of the second switch component is configured to connect to the second output end of the rectifier circuit or the second output end of the alternating current power supply, and a second end of the second switch component is configured to connect to the second input end of the auxiliary power supply.

4. The charging device according to claim 3, wherein the output end of the alternating current power supply comprises a third output end, the input end of the auxiliary power supply comprises a third input end, and the switch component comprises a third switch component; and
a first end of the third switch component is configured to connect to the third output end of the alternating current power supply, and a second end of the third switch component is configured to connect to the third input end of the auxiliary power supply.

5. The charging device according to any one of claims 1 to 4, wherein the charging device comprises a direct current conversion DC/DC circuit, and an input end of the DC/DC circuit is configured to connect to the output end of the rectifier circuit.

6. The charging device according to claim 5, wherein the charging device comprises a charging interface, an input end of the charging interface is configured to connect to an output end of the DC-DC circuit, and an output end of the charging interface is configured to connect to a to-be-charged device.

7. A charging device, wherein the charging device comprises a charging module and a second control unit, and the charging module comprises a switch component, an auxiliary power supply, a first control unit, and a DC/DC circuit;
the auxiliary power supply is configured to supply power to the first control unit, and the first control unit is configured to control the DC/DC circuit;
a first end of the switch component is configured to connect to an input end of the DC/DC circuit, and a second end of the switch component is configured to connect to an input end of the auxiliary power supply;
the charging device comprises the second control unit, and the second control unit is configured to control turn-on and turn-off of the switch component;
the auxiliary power supply supplies power to the first control unit in response to turn-on of the switch component; and
the auxiliary power supply stops, in response to turn-off of the switch component, supplying power to the first control unit.

8. The charging device according to claim 7, wherein the input end of the DC/DC circuit comprises a first input end and a second input end, the input end of the auxiliary power supply comprises a first input end and a second input end, and the switch component comprises a first switch component; and
a first end of the first switch component is configured to connect to the first input end of the DC/DC circuit, and a second end of the first switch component is configured to connect to the first input end of the auxiliary power supply.

9. The charging device according to claim 8, wherein the switch component comprises a second switch component; and
a first end of the second switch component is configured to connect to the second input end of the DC/DC circuit, and a second end of the second switch component is configured to connect to the second input end of the auxiliary power supply.

10. The charging device according to claim 9, wherein the charging device comprises a charging interface, an input end of the charging interface is configured to connect to an output end of the DC-DC circuit, and an output end of the charging interface is configured to connect to a to-be-charged device.
